# EUROPÄISCHE PATENTSCHRIFT

(11) **EP 0 743 708 B1**
(45) Veröffentlichungstag und Bekanntmachung des Hinweises auf die Patenterteilung: **09.02.2000**
(21) Anmeldenummer: 96103523.5
(22) Anmeldetag: 07.03.1996
(51) Int. Cl.: H01R 9/26, H02B 11/04, H01H 1/42

(54) **Sammelschienen-Anschlussklemme**
Terminal for bus bar
Borne de raccordement pour barre de distribution

(30) Priorität: 18.05.1995 DE 29508206 U; 17.06.1995 DE 29509860 U
(43) Veröffentlichungstag der Anmeldung: 20.11.1996
(73) Patentinhaber: WIELAND ELECTRIC GmbH, 96052 Bamberg (DE)
(72) Erfinder: Süss,Christian, D-96129 Strullendorf (DE)
(74) Vertreter: Tergau, Enno, Dipl.-Ing.

(56) Entgegenhaltungen:
- EP-A- 0 528 503
- DE-A- 2 342 988
- DE-A- 4 034 204
- FR-A- 2 170 801
- FR-A- 2 358 757
- GB-A- 2 268 843

## Beschreibung

Die Erfindung betrifft eine Sammelschienen-Anschlußklemme. Solche Anschlußklemmen dienen dazu, von einer als Neutral-, Null- oder Mittelpunktsleiter dienenden Schiene ein entsprechendes Potential abzugreifen. Zu diesem Zweck werden üblicherweise mehrere Anschlußklemmen mit einer Sammelschiene kontaktiert und das so abgegriffene Potential etwa über ein Anschlußkabel zu den Verbrauchern geleitet.

Bei herkömmlichen Anschlußklemmen ist in einem Isoliergehäuse ein Kontaktkörper zwischen einer vorgeschobenen Kontaktstellung und einer zurückgeschobenen Ruhestellung verschiebbar. Der Kontaktkörper weist zwei Schienenkontaktschenkel auf, die in der Kontaktstellung die Sammelschiene übergreifen und den gewünschten elektrischen und mechanischen Kontakt herstellen. Bei bekannten Anschlußklemmen erfolgt die mechanische Fixierung der Schienenkontaktschenkel an der Sammelschiene mittels einer, die Schienenkontaktschenkel durchgreifenden Fixierschraube. Durch Anziehen dieser Schraube werden die Schienenkontaktschenkel an die Sammelschiene gepreßt. Nachteilig dabei ist, daß durch das Anziehen der Schraube ein Drehmoment auf die Anschlußklemme ausgeübt wird. Die Anschlußklemme kann dadurch leicht aus ihrer Soll-Ausrichtung, die üblicherweise rechtwinklig zur Längserstreckung der Sammelschiene verläuft, gedreht werden. Dies ist insbesondere dann hinderlich, wenn mehrere Anschlußklemmen eng nebeneinander angeordnet werden sollen. Auch ist die Handhabung der **beispielsweise aus DE 23 42 188** bekannten Anschlußklemmen umständlich und zeitaufwendig. Aus der DE 40 34 204 A1 ist eine Anschlußklemme bekannt, die durch Klemmkräfte an der Sammelschiene fixiert ist. Sie weist zu diesem Zweck einen Kontaktkörper auf, der in der Kontaktstellung mit einem Maul die Sammelschiene umfaßt. Das Maul wird dabei von zwei einstückig und starr mit dem Kontaktkörper verbundenen Schenkeln gebildet, deren Abstand größer ist als es der Dicke der Sammelschiene entspricht. Um eine Klemmwirkung hervorzurufen, ist in dem Maul wenigstens ein nach Art einer Blattfeder ausgebildeter Klemmschenkel angeordnet.

Aufgabe der Erfindung ist es, eine Anschlußklemme vorzuschlagen, bei der die Nachteile der Schraubfixierung der Klemmen nach dem Stand der Technik umgangen sind und die fertigungs- und montagetechnisch vereinfacht ist.

Diese Aufgabe wird durch die Merkmalskombination des Anspruches 1 gelöst. Danach besteht der Kontaktkörper im wesentlichen aus zwei Kontaktleisten, die sich parallel zur Verschieberichtung des Kontaktkörpers und parallel zueinander erstrecken. **Die Kontaktleisten liegen nur in ihrem Mittenbereich aneinander an. Folglich weisen die die Anschluß- und Schienenkontaktschenkel bildenden Enden einen Abstand zueinander auf. In diesem Mittenbereich sind die Kontaktleisten formschlüssig miteinander verbunden. Die Formschlußverbindung ist dabei derart, daß sie nur in Verschieberichtung wirksam ist. Quer zur Verschieberichtung sind die Kontaktleisten beweglich.** Die in Vorschubrichtung des Kontaktkörpers weisenden Enden der Kontaktleisten bilden die Schienenkontaktschenkel. In der Kontaktstellung übergreifen die Schienenkontaktschenkel die Sammelschiene. Die mechanische und elektrische Fixierung wird ganz einfach dadurch erreicht, daß die Kontaktleisten bzw. die Schienenkontaktschenkel durch wenigstens eine Feder in Klemmrichtung, d. h. also quer zur Verschieberichtung beaufschlagt und gegen die Sammelschiene gepreßt sind. Die erfindungsgemäße Lösung läßt sich auch konstruktiv sehr einfach realisieren. Die Kontaktleisten können ganz einfach durch ein Druckgußverfahren hergestellte Teile sein. Auch ist die Federbeaufschlagung der Kontaktleisten in Klemmrichtung auf einfachste Art und Weise unter Verwendung von Standardfedern oder aus elastischem Material bestehenden Bauteilen realisierbar.

Zweckmäßigerweise sind die in Rückschubrichtung des Kontaktkörpers weisenden Enden der Kontaktleisten als Anschlußkontaktschenkel ausgebildet, die zumindest in der Kontaktstellung des Kontaktkörpers einen elektrischen Kontakt zu einer Kontaktplatte herstellen, die wiederum mit einem Leiter verbindbar ist. Auf diese Weise kann das von der Sammelschiene abgegriffene Potential fortgeleitet bzw. verteilt werden. Die Kontaktplatte ist zwischen den Anschlußkontaktschenkeln angeordnet und wird zumindest in der Kontaktstellung des Kontaktkörpers von ihnen klemmend übergriffen.

Der Vor- bzw. Rückschub des Kontaktkörpers ist in vorteilhafter Weise dadurch ermöglicht, daß der Kontaktkörper einen sich quer zur Verschieberichtung erstreckenden Betätigungsvorsprung aufweist. Dieser ist durch eine Durchgriffsöffnung im Isoliergehäuse zugänglich. Der Kontaktkörper kann daher auf einfache Weise zwischen seiner Kontakt- und Ruhestellung ggf. unter Zuhilfenahme etwa eines Schraubendrehers bewegt werden.

Die Seitenflächen der Kontaktleisten weisen im Mittenbereich eine zu den Innenflächen der Kontaktleisten hin offene und sich in Verschieberichtung erstreckende Nut auf. Im Montagezustand bilden jeweils sich gegenüberliegende Nuten eine Führungsnut, die zur Führung des Kontaktkörpers innerhalb des Gehäuses ausnutzbar ist. Dazu ist lediglich eine komplementär ausgestaltete, in die Führungsnut eingreifende Führungsschiene im Gehäuse notwendig.

Dadurch, daß die Kontaktleisten Gleichteile, d.h. also solche Teile sind, die eine praktisch identische bzw. kongruente Form aufweisen, ist die Fertigung und die Lagerhaltung der erfindungsgemäßen Anschlußklemmen vereinfacht. Bei der Montage einer Anschlußklemme müssen nur die beiden gleichgestalteten Kontaktleisten so angeordnet werden, daß eine Kontaktleiste gegenüber der anderen um ihre Längsachse um 180° gedreht angeordnet ist.

In der Anspruchsfassung für DE, IT und FR ist Anspruch 1 gegenüber der einen Stand der Technik gemäß Art. 54 (3) EPÜ bildenden EP 0 702 427 A2 durch Aufnahme des Merkmals, daß der Kontaktkörper in seiner Kontakt- und Ruhestellung verrastbar ist, abgegrenzt.

Die Erfindung wird nun anhand des in den Zeichnungen dargestellten Ausführungsbeispiels näher erläutert. Es zeigen:
- Fig.1: eine erfindungsgemäße Anschlußklemme in Seitenansicht mit seitlich geöffnetem Isoliergehäuse,
- Fig.2: einen schematisierten Querschnitt längs der Linie II-II in Fig.1,
- Fig.3: eine Seitenansicht gemäß Fig.1, die eine mit einer Sammelschiene verbundene Anschlußklemme zeigt, bei der also der Kontaktkörper sich in seiner vorgeschobenen Kontaktstellung befindet,
- Fig.4: eine Draufsicht auf die Innenfläche einer Kontaktleiste in Richtung des Pfeiles IV in Fig.3,
- Fig.5: eine Seitenansicht der Kontaktleiste nach Fig.4,
- Fig.6: eine Draufsicht auf die Stirnseite der Kontaktleiste nach Fig.5 in Richtung des Pfeiles VI,
- Fig.7: den mittleren Bereich einer Kontaktleiste in perspektivischer Darstellung,
- Fig.8: einen Querschnitt durch zwei Kontaktleisten im Montagezustand, und zwar in der Ruhestellung des Kontaktkörpers,
- Fig.9: eine Schnittdarstellung gemäß Fig.8, wobei aber der Schnitt längs der Linie IX-IX in Fig.1 verläuft,
- Fig.10: die Seitenansicht einer Klemmfeder,
- Fig.11: eine Draufsicht in Richtung des Pfeiles 11 in Fig.10,
- Fig.12: eine mit den Anschlußkontaktschenkeln der Kontaktleisten zusammenwirkende Kontaktplatte in Seitenansicht,
- Fig.13: eine Ansicht in Richtung des Pfeiles XIII,
- Fig.14: eine Ansicht in Richtung des Pfeiles XIV, und
- Fig.15,16: Darstellungen, die das Verbinden einer Anschlußklemme mit einer Sammelschiene zeigen.

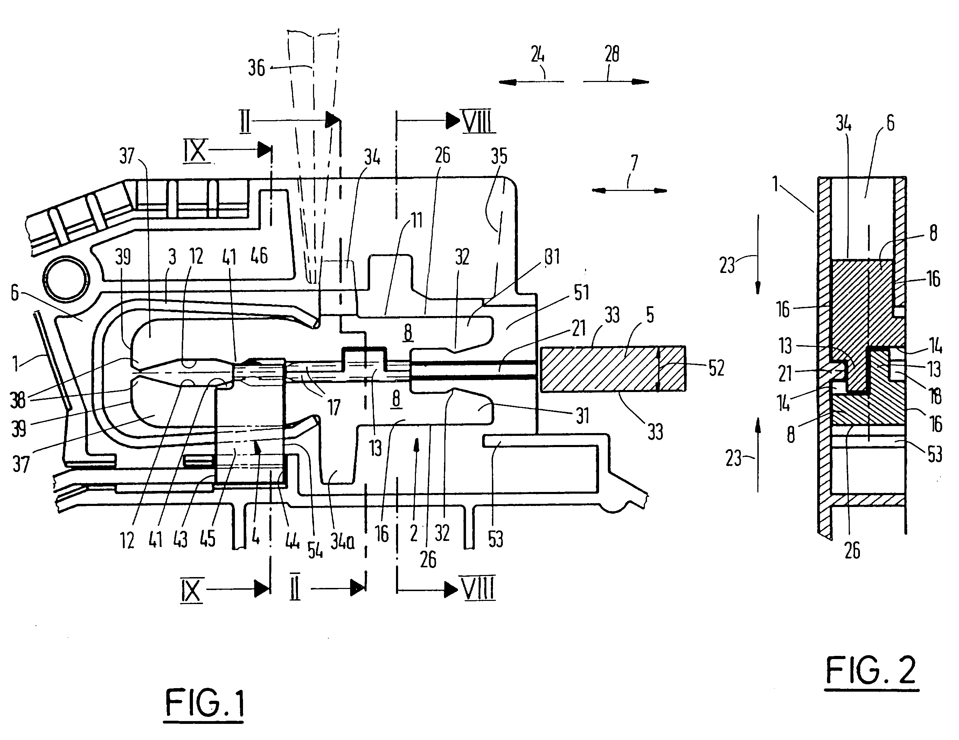

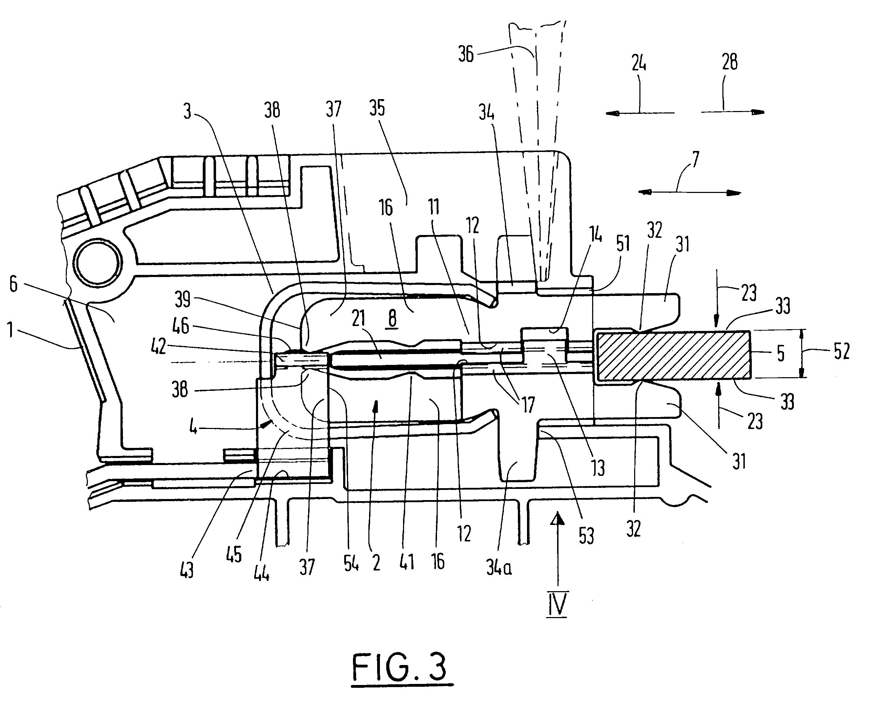

Wie insbesondere aus den Fig.1 und 3 hervorgeht, umfaßt eine erfindungsgemäße Anschlußklemme als Hauptbestandteile ein Isoliergehäuse 1, einen Kontaktkörper 2, eine Klemmfeder 3 und ein Kontaktelement 4. Aus Gründen der besseren Verständlichkeit ist in Fig.1 und 3 auch eine mit dem Anschlußelement zusammenwirkende Sammelschiene 5 dargestellt.

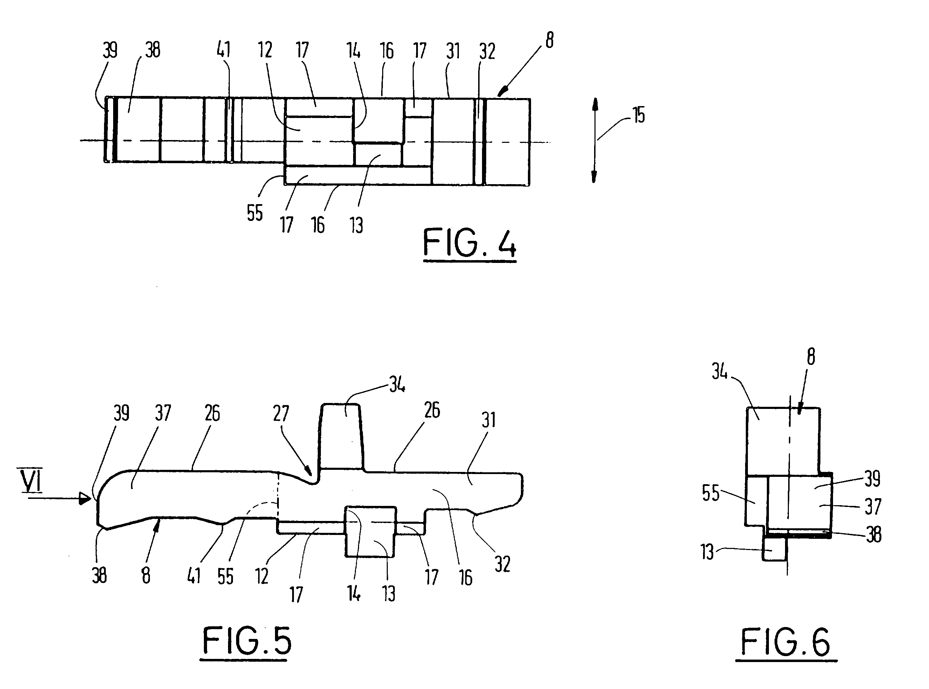

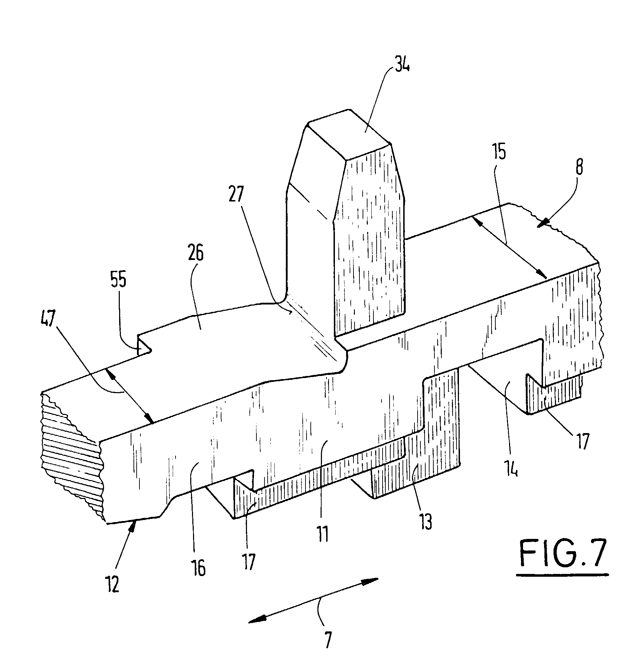

Der Kontaktkörper 2 ist in einer Führungstasche 6 des Isoliergehäuses 1 in Verschieberichtung 7 verschiebbar angeordnet. Er setzt sich zusammen aus zwei Kontaktleisten 8, die parallel zueinander und parallel zur Verschieberichtung 7 angeordnet sind. Die Kontaktleisten 8 stoßen in ihrem Mittenbereich 11 mit ihren Innenflächen 12 (siehe auch Fig.4-7) aneinander. Sie sind dort durch eine in Verschieberichtung 7 wirksame Formschlußverbindung aneinander fixiert. Zu diesem Zweck weisen die Innenflächen 12 der Kontaktleisten 8 einen aus ihrer Planebene etwa rechtwinklig vorspringenden Fixiervorsprung 13 und eine Fixierausnehmung 14 auf. Im Montagezustand greift der Fixiervorsprung 13 der einen Kontaktleiste 8 in die Fixierausnehmung 14 der anderen Kontaktleiste 8. Der im wesentlichen quaderförmige Fixiervorsprung 13 und die Fixierausnehmung 14 einer Kontaktleiste sind in Querrichtung 15 gesehen nebeneinander angeordnet (Fig.4,7). Sie sind außerdem so bemessen und angeordnet, daß die Kontaktleisten 8 als Gleichteile, d.h. also als Teile mit identischer bzw. kongruenter Form, herstellbar sind. Zwei solcher identischer Kontaktleisten 8 sind im Montagezustand so angeordnet, daß die eine Kontaktleiste gegenüber der anderen um 180° um ihre Längsachse verdreht angeordnet ist. Die Fixiervorsprünge 13 greifen dann formschlüssig in die Fixierausnehmungen 14 ein. Auf diese Weise sind die beiden, den Kontaktkörper 2 bildenden Kontaktleisten 8 in Verschieberichtung 7 aneinander fixiert. Quer zur Verschieberichtung 7, genauer gesagt in Klemmrichtung 23, sind sie dagegen beweglich.

Die Seitenflächen 16 der Kontaktleisten 8 weisen im Mittenbereich 11 eine sich in Längsrichtung der Kontaktleisten 8 bzw. parallel zur Verschieberichtung 7 erstreckende und zur Innenfläche 12 hin öffnende Nut 17 auf. Im Montagezustand bilden die sich in Klemmrichtung 23 gegenüberliegenden Nuten 17 zusammen eine Führungsnut 18. In dieser Führungsnut liegt im Montagezustand eine aus den Seiteninnenwandungen des Isoliergehäuses vorragende Führungsschiene 21 ein. Auf dieser Führungsschiene 21 ist der Kontaktkörper 2 in Verschieberichtung 7 zwischen seiner Kontakt- und Ruhestellung hin und her bewegbar.

Die Kontaktleisten 8 sind im Montagezustand durch die im wesentlichen U-förmige Klemmfeder 3 zusammengehalten. Die Klemmfeder 3 ist im Gehäuse so angeordnet, daß sich ihre Planebene etwa in der von der Verschieberichtung 7 und der dazu quer verlaufenden Klemmrichtung 23 aufgespannten Ebene angeordnet ist. Die in Rückschubrichtung 24 weisenden Freienden der Kontaktleisten 8 ragen in den von der U-förmigen Klemmfeder 3 umschriebenen Innenraum, mit anderen Worten, die genannten Freienden der Kontaktleisten 8 sind von der U-förmigen Klemmfeder umfaßt. Die Klemmschenkel 25 der Klemmfeder 3 liegen unter Vorspannung auf den den Innenflächen 12 abgewandten Außenflächen 26 der Kontaktleisten auf. Zur Fixierung der Klemmfeder 3 an den Kontaktleisten 8 weisen diese eine Fixierausnehmung 27 auf. Diese Fixierausnehmung 27 ist dadurch gebildet, daß die Außenfläche 26 in Richtung auf die Innenfläche 12 und in Vorschubrichtung 28 schräg verlaufen. Um eine formschlüssige Fixierung der Klemmschenkel 25 in der Fixierausnehmung 27 zu erreichen, sind die Freienden der Klemmschenkel entsprechend dem Schrägverlauf der Fixierausnehmung 27 abgewinkelt.

Die in Vorschubrichtung 28 weisenden Enden der Kontaktleisten 8 sind als Schienenkontaktschenkel 31 ausgebildet. Sie weisen an ihren Freienden jeweils einen aus der Innenfläche 12 vorspringenden Kontaktvorsprung 32 auf. Die Kontaktvorsprünge 32 wirken mit den Kontaktierungsflächen 33 der Sammelschiene 5 zusammen.

Zum Antrieb des Kontaktkörpers in Verschieberichtung 7 bzw. in Vorschubrichtung 28 und Rückschubrichtung 24 ist am Kontaktkörper ein Betätigungsvorsprung 34 angeordnet. Er erstreckt sich etwa rechtwinklig aus der Außenflächen 26 der in Fig.1 und 3 oberen Kontaktleiste 8 heraus und ragt in eine Durchgriffsöffnung 35 des Isoliergehäuses 1. Er ist dort mit einem geeigneten Werkzeug, etwa einem Schraubendreher 36, hintergreifbar. Durch entsprechende Bewegung des Werkzeugs in Vorschubrichtung 28 bzw. Rückschubrichtung 24 ist dann der Kontaktkörper 2 bewegbar. Da die Kontaktleisten 8 Gleichteile sind, weist auch an der in den Fig.1 und 3 unten angeordnete Kontaktleiste einen dem Betätigungsvorsprung 34 entsprechenden Vorsprung 34a auf. Bei dem in den Zeichnungen dargestellten Ausführungsbeispiel ist keine zweite Durchgriffsöffnung vorhanden, mit der auch dieser Vorsprung 34a zum Antrieb des Kontaktkörpers 2 zugänglich wäre. Prinzipiell ist dies jedoch möglich. Der Vorsprung 34a dient als Anschlag zur Begrenzung des Vorschubs (siehe weiter unten).

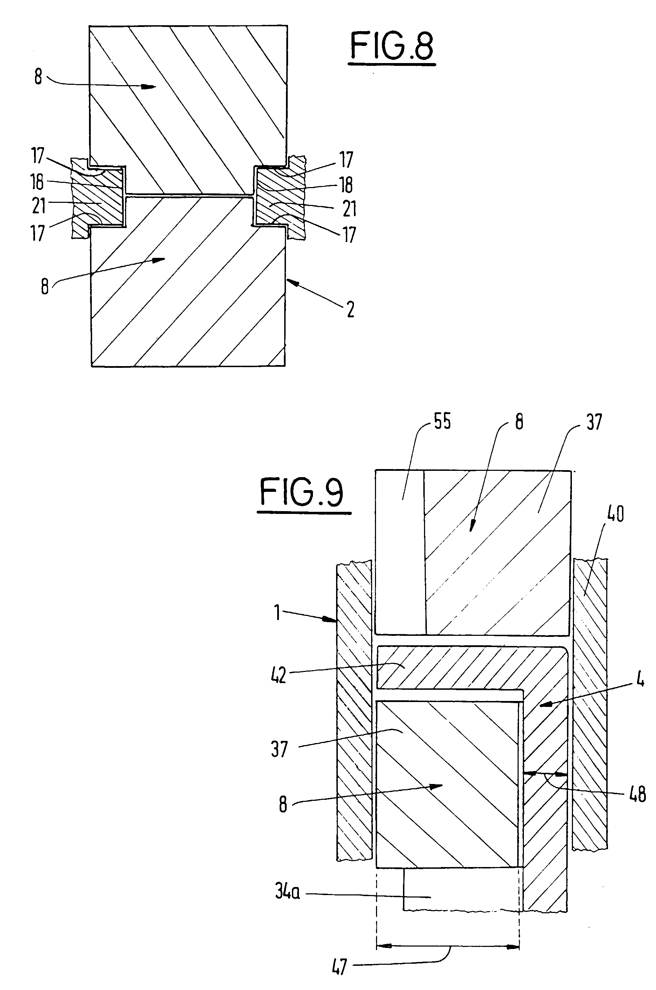

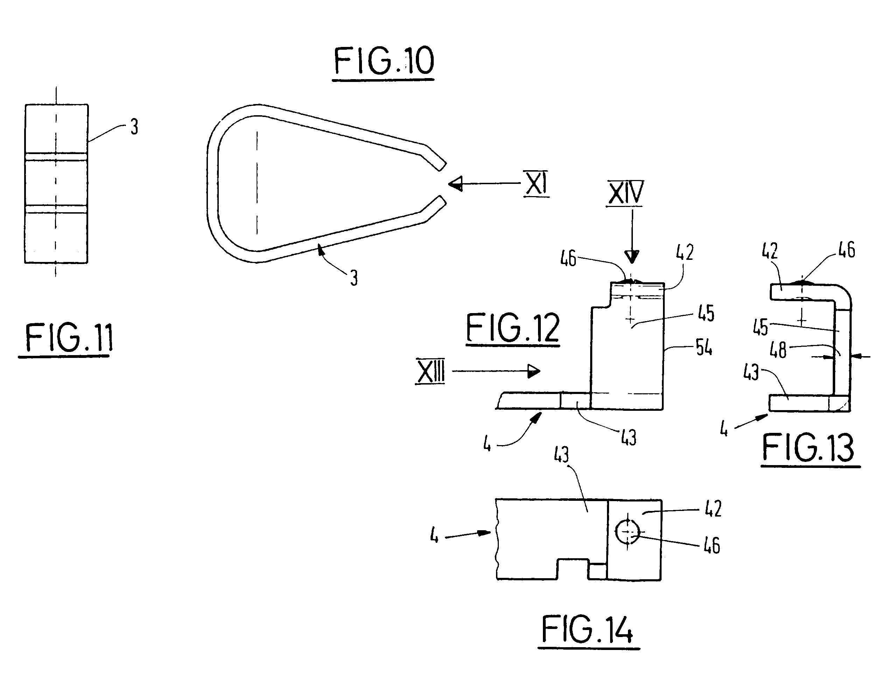

Die in Rückschubrichtung 24 weisenden Enden der Kontaktleisten 8 sind als Anschlußkontaktschenkel 37 ausgebildet. Auf der Innenfläche 12 der Anschlußschenkel 37 sind ein erster und ein zweiter Kontaktvorsprung vorhanden, wobei der erste Kontaktvorsprung an die Stirnfläche 39 des Anschlußkontaktschenkels angrenzt und der zweite Kontaktvorsprung 41 mit Abstand zum ersten angeordnet ist. Die Kontaktvorsprünge 38,41 wirken mit einer Kontaktplatte 42 zusammen, die Teil eines Kontaktelements 4 ist. Das Kontaktelement ist, in Rückschubrichtung 24 gesehen, ein U-förmiges Teil, wobei der eine U-Schenkel die Kontaktplatte und der andere U-Schenkel einen Fuß 43 bildet, mit dem das Kontaktelement 4 in einer Befestigungstasche 44 des Isoliergehäuses 1 formschlüssig einliegt. Fuß 43 und Kontaktplatte 42 sind über einen Verbindungssteg 45 miteinander verbunden. Die Kontaktplatte 42 ragt in den sich zwischen den Anschlußkontaktschenkeln 37 befindlichen Zwischenraum. Sie weist auf ihrer Oberseite einen mit den Kontaktvorsprüngen 38,41 der in Fig.1 und 3 oberen Kontaktleiste 8 zusammenwirkenden Rastvorsprung 46 auf. Der Verbindungssteg ist im Montagezustand so angeordnet, daß er sich zwischen dem ihm benachbarten Anschlußkontaktschenkel 37 und der Gehäuseseitenwand 40 befindet (siehe Fig.9). Die Breite 47 der Anschlußkontaktschenkel ist gegenüber der Breite der Schienenkontaktschenkel um einen Betrag verringert, welcher der Dicke 48 (Fig.9,13) des Verbindungsstegs 45 entspricht. Diese Maßnahme kommt der Forderung entgegen, Anschlußklemmen möglichst schmal zu bauen. Denn je geringer der Platzbedarf der Klemmen in Breitenrichtung ist, desto mehr Klemmen haben auf der Längeneinheit einer Sammelschiene Platz.

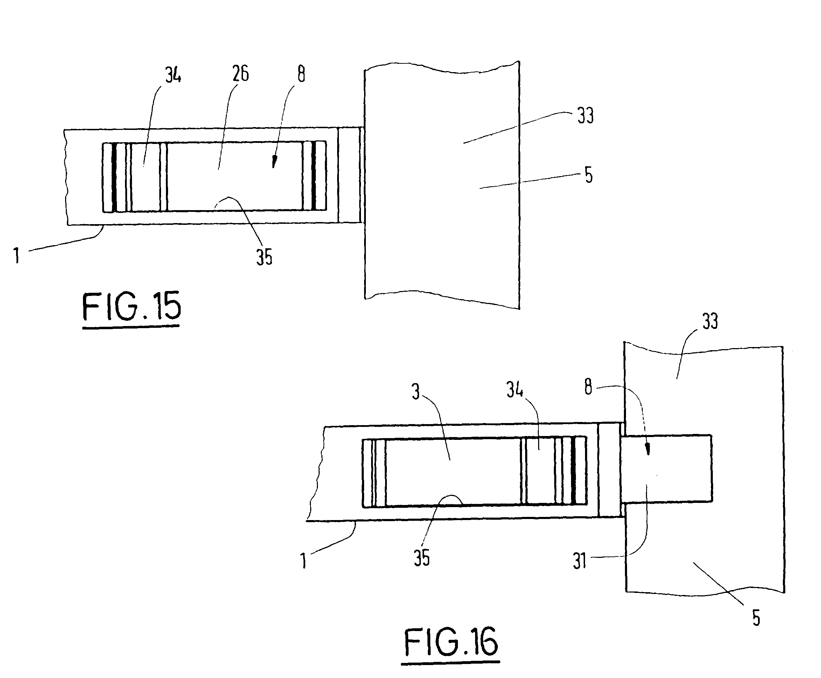

Die Funktionsweise einer erfindungsgemäßen Anschlußklemme wird nun im folgenden erläutert: In der in Fig.1 dargestellten Situation befindet sich der Kontaktkörper 2 in seiner Ruhestellung. Er ist vollständig innerhalb des Isoliergehäuses 1 angeordnet. Der Kontaktvorsprung 41 der oberen Kontaktleiste 8 hintergreift den Rastvorsprung 46. Um die Anschlußklemme mit einer Sammelschiene 5 zu verbinden, wird zunächst die Anschlußklemme an die Sammelschiene herangeführt, wie dies in Fig.15 gezeigt ist. Sodann wird durch ein geeignetes Werkzeug, etwa einen durch die gestrichelten Linien in Fig.1 dargestellten Schraubendreher 36, der Betätigungsvorsprung 34 in Vorschubrichtung 28 betätigt. Der Kontaktkörper bewegt sich dadurch in die gleiche Richtung und gelangt schließlich in seine Kontaktstellung. In dieser Stellung ragen die Enden der Schienenkontaktschenkel 31 aus einer Durchführöffnung 51 des Isoliergehäuses 1 heraus. In dieser vorgeschobenen Stellung übergreifen die Schienenkontaktschenkel die Sammelschiene 5 (Fig.3,16) und werden mit ihren Kontaktvorsprüngen 32, bedingt durch die Einwirkung der Klemmfeder 3, auf die Kontaktierungsflächen 33 der Sammelschiene 5 gepreßt. Der Abstand der Kontaktvorsprünge 32 in Klemmrichtung 23 ist geringer als die Dicke 52 der Sammelschiene 5. Dadurch werden die Schienenkontaktschenkel 31 bzw. die Kontaktleisten 8 beim Aufschieben auf die Sammelschiene 5 entgegen der Klemmrichtung 23 auseinander bewegt und dadurch die Klemmfeder 3 etwas aufgeweitet. In der Kontaktstellung übergreifen die Anschlußkontaktschenkel 37 mit ihren Kontaktvorsprüngen 38 die Kontaktplatte 42. Bedingt durch die Federbeaufschlagung der Kontaktleisten 8 in deren Mittenbereich 11 wirkt auf die Anschlußkontaktschenkel 37 praktisch die gleiche Klemmkraft ein, wie auf die Schienenkontaktschenkel 31. Mit dieser Klemmkraft werden die Kontaktvorsprünge 38 an die Kontaktplatte gedrückt. **Vorteilhaft dabei ist, daß während des anfänglichen, mit einem Auseinanderweichen der Schienenkontaktschenkel 31 verbundenen Aufschiebens des Kontaktkörpers 2 auf die Sammelschiene 5 die Anschlußkontaktschenkel 37 mit ihren Kontaktvorsprüngen 38 noch nicht auf die Kontaktplatte 42 aufgelaufen sind und dadurch, wie sich aus Fig. 1 und Fig. 3 ergibt, in Klemmrichtung 23 aufeinanderzubewegbar sind. Das anfängliche Aufschieben des Kontaktkörpers 2 auf eine Sammelschiene ist dadurch erleichtert.**

Die Ausfahrbewegung des Kontaktkörpers 2 ist dadurch begrenzt, daß der Vorsprung 34a an einen Begrenzungsanschlag 53 des Isoliergehäuses 1 anschlägt.

Zum Abnehmen der Anschlußklemme von der Sammelschiene 5 wird ein Werkzeug (Schraubendreher 36 in Fig.3) angesetzt und der Kontaktkörper in Rückschubrichtung 24 aus seiner Kontaktstellung zurückbewegt. Die Schienenkontaktschenkel 31 geraten dabei außer Eingriff mit der Sammelschiene 5, so daß die Anschlußklemme von der Sammelschiene 5 entfernt werden kann. Die Rückschubbewegung wird durch einen mit der in Vorschubrichtung 28 weisenden Kante 54 des Verbindungsstegs 45 zusammenwirkenden Anschlag an der ihr benachbarten Kontaktleiste 8 begrenzt. Dieser Anschlag ist die den Übergang zwischen dem breiteren Schienenkontaktschenkel 31 und dem schmaleren Anschlußkontaktschenkel 37 bildende Stufe 55 (vgl.Fig.4-7,9). In seinen beiden Extremstellungen, nämlich seiner Ruhestellung und seiner Kontaktstellung, ist der Kontaktkörper 2 verrastet. In der Kontaktstellung hintergreift der Kontaktvorsprung 38 und in der Ruhestellung der Kontaktvorsprung 41 der oberen Kontaktleiste 8 den Rastvorsprung 46 der Kontaktplatte 42.

### Bezugszeichenliste

- 1: Isoliergehäuse
- 2: Kontaktkörper
- 3: Klemmfeder
- 4: Kontaktelement
- 5: Sammelschiene
- 6: Führungstasche
- 7: Verschieberichtung
- 8: Kontaktleiste
- 11: Mittenbereich
- 12: Innenfläche
- 13: Fixiervorsprung
- 14: Fixierausnehmung
- 15: Querrichtung
- 16: Seitenfläche
- 17: Nut
- 18: Führungsnut
- 21: Führungsschiene
- 23: Klemmrichtung
- 24: Rückschubrichtung
- 25: Klemmschenkel
- 26: Außenfläche
- 27: Fixierausnehmung
- 28: Vorschubrichtung
- 31: Schienenkontaktschenkel
- 32: Kontaktvorsprung
- 33: Kontaktierungsfläche
- 34: Betätigungsvorsprung
- 34a: Vorsprung
- 35: Durchgriffsöffnung
- 36: Schraubendreher
- 37: Anschlußkontaktschenkel
- 38: Kontaktvorsprung
- 39: Stirnfläche
- 40: Gehäuse-Seitenwand
- 41: Kontaktvorsprung
- 42: Kontaktplatte
- 43: Fuß
- 44: Befestigungstasche
- 45: Verbindungssteg
- 46: Rastvorsprung
- 47: Breite
- 48: Dicke
- 51: Durchführöffnung
- 52: Dicke
- 53: Begrenzungsanschlag
- 54: Kante
- 55: Stufe

## Patentansprüche (Patentansprüche für folgende(n) Vertragsstaat(en): CH, LI, SE)

1. Sammelschienen-Anschlußklemme mit einem in einem Isoliergehäuse (1) zwischen einer vorgeschobenen Kontaktstellung, und einer zurückgezogenen Ruhestellung verschiebbaren Kontaktkörper (2), wobei der Kontaktkörper (2) zwei Schienenkontaktschenkel (31) aufweist, mit denen in der Kontaktstellung eine Sammelschiene (5) klemmend übergreifbar ist und die in der Ruhestellung außer Eingriff mit der Sammelschiene (5) sind, wobei der Kontaktkörper (2) im wesentlichen aus zwei Kontaktleisten (8) besteht,
- die sich parallel zueinander und parallel zur Verschieberichtung (7) des Kontaktkörpers erstrecken und
- deren in Vorschubrichtung (28) des Kontaktkörpers (2) weisende Enden die Schienenkontaktschenkel (31) bilden,
dadurch gekennzeichnet,
daß die Kontaktleisten (8)
- mit ihrem Mittenbereich (11) aneinander anliegen und dort durch eine in Verschieberichtung wirksame Formschlußverbindung aneinander fixiert sind, sowie
- durch wenigstens eine Feder (3) in Klemmrichtung (23) beaufschlagt sind.

2. Anschlußklemme nach Anspruch 1,
dadurch gekennzeichnet,
daß die in Rückschubrichtung (24) des Kontaktkörpers (24) weisenden Enden der Kontaktleisten (8) Anschlußkontaktschenkel (37) bilden, die zumindest in der Kontaktstellung des Kontaktkörpers eine zwischen ihnen angeordnete Kontaktplatte (42) klemmend übergreifen.

3. Anschlußklemme nach Anspruch 2,
gekennzeichnet durch
eine Formschlußverbindung derart, daß die einander zugewandten Innenflächen (12) der Kontaktleisten (8) jeweils wenigstens einen mit einer Fixierausnehmung (14) der anderen Kontaktleiste (8) zusammenwirkenden Fixiervorsprung (13) aufweisen.

4. Anschlußklemme nach einem der Ansprüche 1 bis 3,
dadurch gekennzeichnet,
daß der Kontaktkörper (2) einen sich quer zur Verschieberichtung (7) erstreckenden und durch eine Durchgriffsöffnung (35) des Isoliergehäuses (1) zugänglichen Betätigungsvorsprung (34) aufweist.

5. Anschlußklemme nach einem der Ansprüche 2 bis 4,
dadurch gekennzeichnet,
daß die Seitenflächen (16) der Kontaktleisten (8) im Mittenbereich (11) eine zu den Innenflächen (12) der Kontaktleisten (8) hin offene und sich in Verschieberichtung (7) erstreckende Nut (17) aufweisen, wobei sich in Klemmrichtung (23) gegenüberliegende Nuten eine Führungsnut bilden, in die eine komplementär ausgestaltete Führungsschiene (21) des Isoliergehäuses (1) eingreift.

6. Anschlußklemme nach einem der Ansprüche 1 bis 5,
gekennzeichnet durch
eine Verrastbarkeit des Kontaktkörpers in seiner Kontakt- und Ruhestellung.

7. Anschlußklemme nach einem der Ansprüche 1 bis 6,
dadurch gekennzeichnet,
daß die Kontaktleisten (8) Gleichteile sind.

8. Anschlußklemme nach einem der Ansprüche 1 bis 7,
dadurch gekennzeichnet,
daß die Kontaktleisten (8) in ihrem Mittenbereich (11) in Klemmrichtung (23) federbeaufschlagt sind.

9. Anschlußklemme nach Anspruch 8,
gekennzeichnet durch
eine U-förmige Klemmfeder (3), deren Federschenkelenden die Außenflächen (26) der Kontaktleisten (8) beaufschlagen.

10. Anschlußklemme nach Anspruch 9,
dadurch gekennzeichnet,
daß die Planebene der Klemmfeder (3) in der von der Klemmrichtung (23) und der Verschieberichtung (7) aufgespannten Ebene angeordnet ist.

## Patentansprüche (Patentansprüche für folgende(n) Vertragsstaat(en): DE, IT, FR)

1. Sammelschienen-Anschlußklemme mit einem in einem Isoliergehäuse (1) zwischen einer vorgeschobenen Kontaktstellung, und einer zurückgezogenen Ruhestellung verschiebbaren Kontaktkörper (2), wobei der Kontaktkörper (2) zwei Schienenkontaktschenkel (31) aufweist, mit denen in der Kontaktstellung eine Sammelschiene (5) klemmend übergreifbar ist und die in der Ruhestellung außer Eingriff mit der Sammelschiene (5) sind, wobei der Kontaktkörper (2) im wesentlichen aus zwei Kontaktleisten (8) besteht,
- die sich parallel zueinander und parallel zur Verschieberichtung (7) des Kontaktkörpers erstrecken und
- deren in Vorschubrichtung (28) des Kontaktkörpers (2) weisende Enden die Schienenkontaktschenkel (31) bilden,
dadurch gekennzeichnet,
daß die Kontaktleisten (8)
- mit ihrem Mittenbereich (11) aneinander anliegen und dort durch eine in Verschieberichtung wirksame Formschlußverbindung aneinander fixiert sind, sowie
- durch wenigstens eine Feder (3) in Klemmrichtung (23) beaufschlagt sind, und
daß der Kontaktkörper (2) in seiner Kontakt- und Ruhestellung verrastbar ist.

2. Anschlußklemme nach Anspruch 1,
dadurch gekennzeichnet,
daß die in Rückschubrichtung (24) des Kontaktkörpers (24) weisenden Enden der Kontaktleisten (8) Anschlußkontaktschenkel (37) bilden, die zumindest in der Kontaktstellung des Kontaktkörpers eine zwischen ihnen angeordnete Kontaktplatte (42) klemmend übergreifen.

3. Anschlußklemme nach Anspruch 2,
gekennzeichnet durch
eine Formschlußverbindung derart, daß die einander zugewandten Innenflächen (12) der Kontaktleisten (8) jeweils wenigstens einen mit einer Fixierausnehmung (14) der anderen Kontaktleiste (8) zusammenwirkenden Fixiervorsprung (13) aufweisen.

4. Anschlußklemme nach einem der Ansprüche 1 bis 3,
dadurch gekennzeichnet,
daß der Kontaktkörper (2) einen sich quer zur Verschieberichtung (7) erstreckenden und durch eine Durchgriffsöffnung (35) des Isoliergehäuses (1) zugänglichen Betätigungsvorsprung (34) aufweist.

5. Anschlußklemme nach einem der Ansprüche 2 bis 4,
dadurch gekennzeichnet,
daß die Seitenflächen (16) der Kontaktleisten (8) im Mittenbereich (11) eine zu den Innenflächen (12) der Kontaktleisten (8) hin offene und sich in Verschieberichtung (7) erstreckende Nut (17) aufweisen, wobei sich in Klemmrichtung (23) gegenüberliegende Nuten eine Führungsnut (18) bilden, in die eine komplementär ausgestaltete Führungsschiene (21) des Isoliergehäuses (1) eingreift.

6. Anschlußklemme nach einem der Ansprüche 1 bis 5,
dadurch gekennzeichnet,
daß die Kontaktleisten (8) Gleichteile sind.

7. Anschlußklemme nach einem der Ansprüche 1 bis 6,
dadurch gekennzeichnet,
daß die Kontaktleisten (8) in ihrem Mittenbereich (11) in Klemmrichtung (23) federbeaufschlagt sind.

8. Anschlußklemme nach Anspruch 7,
gekennzeichnet durch
eine U-förmige Klemmfeder (3), deren Federschenkelenden die Außenflächen (26) der Kontaktleisten (8) beaufschlagen.

9. Anschlußklemme nach Anspruch 8,
dadurch gekennzeichnet,
daß die Planebene der Klemmfeder (3) in der von der Klemmrichtung (23) und der Verschieberichtung (7) aufgespannten Ebene angeordnet ist.

## Claims (Claims for the following Contracting State(s): CH, LI, SE)

1. Busbar connecting terminal having a contact body (2) which can be moved in an insulating housing (1) between an advanced contact position and a withdrawn rest position, with the contact body (2) having two busbar contact limbs (31) by means of which it is possible to grip a busbar (5), such that it is clamped, in the contact position, and which are disengaged from the busbar (5) in the rest position, with the contact body (2) essentially comprising two contact strips (8),
- which extend parallel to one another and parallel to the movement direction (7) of the contact body, and
- whose ends which point in the advancing direction (28) of the contact body (2) form the bus contact limbs (31),
characterized in that
- the central regions (11) of the contact strips (8) rest against one another and are fixed against one another there by means of a positively locking connection which acts in the movement direction, and
- at least one spring (3) acts on the contact strips (8) in the clamping direction (23).

2. Connecting terminal according to Claim 1,
characterized
in that those ends of the contact strips (8) which point in the withdrawal direction (24) of the contact body (24) form connecting contact limbs (37) which, at least when the contact body is in the contact position, grip a contact plate (42), which is arranged between them, such that it is clamped.

3. Connecting terminal according to Claim 2,
characterized by
a positively locking connection in such a manner that the mutually facing inner surfaces (12) of the contact strips (8) each have at least one fixing projection (13) which interacts with the fixing recess (14) on the other contact strip (8).

4. Connecting terminal according to one of Claims 1 to 3,
characterized
in that the contact body (2) has an operating projection (34) which extends transversely with respect to the movement direction (7) and is accessible through an access opening (35) in the insulating housing (1).

5. Connecting terminal according to one of Claims 2 to 4,
characterized
in that, in the central region (11), the side surfaces (16) of the contact strips (8) have a groove (17) which is open towards the inner surfaces (12) of the contact strips (8) and extends in the movement direction (7), with grooves which are opposite in the clamping direction (23) forming a guide groove in which a guide rail (21), which is designed in a complementary manner, on the insulating housing (1) engages.

6. Connecting terminal according to one of Claims 1 to 5,
characterized by
the contact body having the capability to be latched in its contact position and rest position.

7. Connecting terminal according to one of Claims 1 to 6,
characterized
in that the contact strips (8) are identical parts.

8. Connecting terminal according to one of Claims 1 to 7,
characterized
in that the contact strips (8) are spring-loaded in the clamping direction (23) in their central region (11).

9. Connecting terminal according to Claim 8,
characterized by
a U-shaped clamping spring (3) whose spring limb ends act on the outer surfaces (26) of the contact strips (8).

10. Connecting terminal according to Claim 9,
characterized
in that the flat plane of the clamping spring (3) is arranged in the plane covered by the clamping direction (23) and the movement direction (7).

## Claims (Claims for the following Contracting State(s): DE, IT, FR)

1. Busbar connecting terminal having a contact body (2) which can be moved in an insulating housing (1) between an advanced contact position and a withdrawn rest position, with the contact body (2) having two busbar contact limbs (31) by means of which it is possible to grip a busbar (5), such that it is clamped, in the contact position, and which are disengaged from the busbar (5) in the rest position, with the contact body (2) essentially comprising two contact strips (8),
- which extend parallel to one another and parallel to the movement direction (7) of the contact body, and
- whose ends which point in the advancing direction (28) of the contact body (2) form the bus contact limbs (31),
characterized in that
- the central regions (11) of the contact strips (8) rest against one another and are fixed against one another there by means of a positively locking connection which acts in the movement direction, and
- at least one spring (3) acts on the contact strips (8) in the clamping direction (23), and in that the contact body (2) can be latched in its contact position and rest position,

2. Connecting terminal according to Claim 1,
characterized
in that those ends of the contact strips (8) which point in the withdrawal direction (24) of the contact body (24) form connecting contact limbs (37) which, at least when the contact body is in the contact position, grip a contact plate (42), which is arranged between them, such that it is clamped.

3. Connecting terminal according to Claim 2,
characterized by
a positively locking connection in such a manner that the mutually facing inner surfaces (12) of the contact strips (8) each have at least one fixing projection (13) which interacts with the fixing recess (14) on the other contact strip (8).

4. Connecting terminal according to one of Claims 1 to 3,
characterized
in that the contact body (2) has an operating projection (34) which extends transversely with respect to the movement direction (7) and is accessible through an access opening (35) in the insulating housing (1).

5. Connecting terminal according to one of Claims 2 to 4,
characterized
in that, in the central region (11), the side surfaces (16) of the contact strips (S) have a groove (17) which is open towards the inner surfaces (12) of the contact strips (8) and extends in the movement direction (7), with grooves which are opposite in the clamping direction (23) forming a guide groove (18) in which a guide rail (21), which is designed in a complementary manner, on the insulating housing (1) engages.

6. Connecting terminal according to one of Claims 1 to 5,
characterized
in that the contact strips (8) are identical parts.

7. Connecting terminal according to one of Claims 1 to 6,
characterized
in that the contact strips (8) are spring-loaded in the clamping direction (23) in their central region (11).

8. Connecting terminal according to Claim 7,
characterized by
a U-shaped clamping spring (3) whose spring limb ends act on the outer surfaces (26) of the contact strips (8).

9. Connecting terminal according to Claim 8,
characterized
in that the flat plane of the clamping spring (3) is arranged in the plane covered by the clamping direction (23) and the movement direction (7).

## Revendications (Revendications pour l'(les) Etat(s) contractant(s) suivant(s): CH, LI, SE)

1. Borne de connexion de barres collectrices équipée d'un corps de contact (2) déplaçable dans un boîtier isolant (1) entre une position de contact déployée, et une position de repos rétractée, le corps de contact (2) présentant deux branches de contact de barre (31), à l'aide desquelles, dans la position de contact, une barre collectrice (5) peut être recouverte par serrage et qui sont dégagées de la barre collectrice (5) dans la position de repos, le corps de contact (2) se composant essentiellement de deux barrettes de contact (8),
- qui s'étendent parallèlement entre elles et parallèlement à la direction de déplacement (7) du corps de contact, et
- dont les extrémités tournées dans la direction de poussée (28) du corps de contact (2) forment les branches de contact de barre (31),
caractérisée en ce que les barrettes de contact (8)
- sont adjacentes l'une à l'autre par leur région médiane (11) et y sont fixées l'une à l'autre par une liaison à verrouillage par conformation agissant dans la direction du déplacement, et
- sont sollicitées par au moins un ressort (3) dans la direction de serrage (23).

2. Borne de connexion selon la revendication 1, caractérisée en ce que les extrémités tournées dans la direction de rétraction (24) du corps de contact (2) des barrettes de contact (8) forment des branches de contact de raccordement (37), qui recouvrent par serrage, au moins dans la position de contact du corps de contact, une plaque de contact (42) disposée entre elles.

3. Borne de connexion selon la revendication 2, caractérisée par une liaison à verrouillage par conformation de telle sorte que les surfaces internes (12) tournées l'une vers l'autre des barrettes de contact (8) présentent respectivement au moins une partie saillante de fixation (13) coopérant avec un évidement de fixation (14) de l'autre barrette de contact (8).

4. Borne de connexion selon l'une quelconque des revendications 1 à 3, caractérisée en ce que le corps de contact (2) présente une partie saillante de manoeuvre (34) s'étendant perpendiculairement à la direction de déplacement (7) et accessible par l'intermédiaire d'une ouverture de pénétration (35) du boîtier isolant (1).

5. Borne de connexion selon l'une quelconque des revendications 2 à 4, caractérisée en ce que les surfaces latérales (16) des barrettes de contact (8) présentent dans la région médiane (11) une rainure (17) ouverte en direction des surfaces internes (12) des barrettes de contact (8) et s'étendant dans la direction de déplacement (7), des rainures en vis-à-vis dans la direction de serrage (23) formant une rainure de guidage (18), dans laquelle pénètre un rail de guidage (21) de forme complémentaire du boîtier isolant (1).

6. Borne de connexion selon l'une quelconque des revendications 1 à 5, caractérisée par une possibilité e blocage du corps de contact dans sa position de contact et dans sa position de repos.

7. Borne de connexion selon l'une quelconque des revendications 1 à 6, caractérisé en ce que les barrettes de connexion (8) sont des éléments identiques.

8. Borne de connexion selon l'une quelconque des revendications 1 à 7, caractérisée en ce que les barrettes de connexion (8) sont sollicitées par ressort dans leur région médiane (11) en direction du serrage (23).

9. Borne de connexion selon la revendication 8, caractérisée par un ressort de serrage (3) en forme de U, dont les branches élastiques sollicitent les surfaces extérieures (26) des barrettes de contact (8).

10. Borne de connexion selon la revendication 9, caractérisée en ce que le plan du ressort de serrage (3) est disposé dans le plan formé par la direction de serrage (23) et la direction de déplacement (7).

## Revendications (Revendications pour l'(les) Etat(s) contractant(s) suivant(s): DE, IT, FR)

1. Borne de connexion de barres collectrices équipée d'un corps de contact (2) déplaçable dans un boîtier isolant (1) entre une position de contact déployée, et une position de repos rétractée, le corps de contact (2) présentant deux branches de contact de barre (31), à l'aide desquelles, dans la position de contact, une barre collectrice (5) peut être recouverte par serrage et qui sont dégagées de la barre collectrice (5) dans la position de repos, le corps de contact (2) se composant essentiellement de deux barrettes de contact (8),
- qui s'étendent parallèlement entre elles et parallèlement à la direction de déplacement (7) du corps de contact, et
- dont les extrémités tournées dans la direction de poussée (28) du corps de contact (2) forment les branches de contact de barre (31),
caractérisée en ce que les barrettes de contact (8)
- sont adjacentes l'une à l'autre par leur région médiane (11) et y sont fixées l'une à l'autre par une liaison à verrouillage par conformation agissant dans la direction du déplacement, et
- sont sollicitées par au moins un ressort (3) dans la direction de serrage (23), et
- en ce que le corps de contact (2) peut être verrouillé dans sa position de contact et dans sa position de repos.

2. Borne de connexion selon la revendication 1, caractérisée en ce que les extrémités tournées dans la direction de rétraction (24) du corps de contact (2) des barrettes de contact (8) forment des branches de contact de raccordement (37), qui recouvrent par serrage, au moins dans la position de contact du corps de contact, une plaque de contact (42) disposée entre elles.

3. Borne de connexion selon la revendication 2, caractérisée par une liaison à verrouillage par conformation de telle sorte que les surfaces internes (12) tournées l'une vers l'autre des barrettes de contact (8) présentent respectivement au moins une partie saillante de fixation (13) coopérant avec un évidement de fixation (14) de l'autre barrette de contact (8).

4. Borne de connexion selon l'une quelconque des revendications 1 à 3, caractérisée en ce que le corps de contact (2) présente une partie saillante de manoeuvre (34) s'étendant perpendiculairement à la direction de déplacement (7) et accessible par l'intermédiaire d'une ouverture de pénétration (35) du boîtier isolant (1).

5. Borne de connexion selon l'une quelconque des revendications 2 à 4, caractérisée en ce que les surfaces latérales (16) des barrettes de contact (8) présentent dans la région médiane (11) une rainure (17) ouverte en direction des surfaces internes (12) des barrettes de contact (8) et s'étendant dans la direction de déplacement (7), des rainures en vis-à-vis dans la direction de serrage (23) formant une rainure de guidage (18), dans laquelle pénètre un rail de guidage (21) de forme complémentaire du boîtier isolant (1).

6. Borne de connexion selon l'une quelconque des revendications 1 à 5, caractérisée en ce que les barrettes de connexion (8) sont des éléments identiques.

7. Borne de connexion selon l'une quelconque des revendications 1 à 6, caractérisée en ce que les barrettes de connexion (8) sont sollicitées par ressort dans leur région médiane (11) en direction du serrage (23).

8. Borne de connexion selon la revendication 7, caractérisée par un ressort de serrage (3) en forme de U, dont les branches élastiques sollicitent les surfaces extérieures (26) des barrettes de contact (8).

9. Borne de connexion selon la revendication 8, caractérisée en ce que le plan du ressort de serrage (3) est disposé dans le plan formé par la direction de serrage (23) et la direction de déplacement (7).
